# FASCICULE DE BREVET EUROPEEN

(11) **EP 3 732 000 B1**
(45) Date de publication et mention de la délivrance du brevet: **16.08.2023**
(21) Numéro de dépôt: 18830874.6
(22) Date de dépôt: 28.12.2018
(51) Int. Cl.: B25J 9/00

(54) **STRUCTURE D'EXOSQUELETTE**
EXOSKELETTSTRUKTUR
EXOSKELETON STRUCTURE

(30) Priorité: 28.12.2017 FR 1763302
(43) Date de publication de la demande: 04.11.2020
(73) Titulaire: SAFRAN ELECTRONICS & DEFENSE, 92100 Boulogne Billancourt (FR); B-Temia Inc., St-Augustin-de-Desmaures, QC G3A 2J9 (CA)
(72) Inventeur: BELANGER-DESBIENS, Alexandre, Québec, Québec G1P4R1 (CA); SOUCY, Francisco, Québec, Québec G1P4R1 (CA); GAGNE, Sylvain, Québec, Québec G1P4R1 (CA); ZOSO, Nathaniel, Québec, Québec G2A 3E8 (CA); GRENIER, Jordane, 92100 Boulogne-Billancourt (FR)
(74) Mandataire: Regimbeau
(86) Numéro de dépôt international: PCT/EP2018/097084
(87) Numéro de publication internationale: WO 2019/129855

(56) Documents cités:
- CN-A- 106 112 989
- DE-A1-102016 104 200
- FR-A1- 3 018 680
- US-A- 3 358 678
- US-A1- 2012 184 880

## Description

### DOMAINE DE L'INVENTION

L'invention concerne une structure d'exosquelette.

### ETAT DE LA TECHNIQUE

Dans le domaine militaire, les fantassins sont couramment équipés de sacs à dos leur permettant de transporter du matériel. Lorsque les fantassins réalisent des missions prolongées, la masse du sac à dos peut atteindre 50 kilogrammes. La masse du sac à dos peut diminuer fortement la mobilité du fantassin et engendrer une dépense métabolique plus importante.

De plus, le sac à dos repose généralement sur les épaules ou sur les hanches de l'utilisateur, ce qui peut générer des troubles musculo-squelettiques au niveau des épaules, des pressions cutanées, voire être à l'origine de symptômes neurologiques périphériques par compression nerveuse (fourmillements).

Les solutions actuelles consistent à répartir la masse du sac à dos à la fois sur les épaules à l'aide de bretelles et sur les hanches à l'aide d'une ceinture ventrale. Ces solutions ne permettent toutefois pas de soulager totalement l'utilisateur.

Les exosquelettes d'assistance à l'effort sont des structures mécaniques qui doublent la structure du squelette humain et qui permettent d'améliorer les capacités physiques du corps humain.

Certaines structures d'exosquelette ont été proposées qui permettent de faire reposer la masse du sac à dos sur le sol.

Cependant, les structures d'exosquelette connues (parfois qualifiées de « robots marcheurs ») génèrent un encombrement très significatif et réduisent la mobilité de l'utilisateur. Un exosquelette est divulgué dans le document US3358678A.

### RESUME DE L'INVENTION

Un but de l'invention est de proposer une solution pour permettre à un utilisateur d'être soulagé d'une partie importante de la masse de son sac à dos, sans pour autant réduire la mobilité des épaules, du tronc et du bassin de l'utilisateur pendant la marche ou la course.

Ce but est atteint dans le cadre de la présente invention grâce à une structure d'exosquelette comprenant :
- un ensemble de bassin comprenant une ceinture propre à entourer le bassin d'un utilisateur pour attacher l'ensemble de bassin au bassin de l'utilisateur,
- un premier ensemble de membre inférieur propre à être fixé à un premier membre inférieur de l'utilisateur,
- une première liaison pivot raccordant le premier ensemble de membre inférieur à l'ensemble de bassin, la première liaison pivot autorisant une rotation du premier ensemble de membre inférieur par rapport à l'ensemble de bassin lors d'un mouvement d'abduction ou d'adduction du premier membre inférieur,
- un deuxième ensemble de membre inférieur propre à être fixé à un deuxième membre inférieur de l'utilisateur,
- une deuxième liaison pivot raccordant le deuxième ensemble de membre inférieur à l'ensemble de bassin, la deuxième liaison pivot autorisant une rotation du deuxième ensemble de membre inférieur par rapport à l'ensemble de bassin lors d'un mouvement d'abduction ou d'adduction du deuxième membre inférieur,
- un ensemble de dos comprenant un harnais propre à être attaché au thorax de l'utilisateur,
- un mécanisme de colonne vertébrale reliant l'ensemble de dos à l'ensemble de bassin,
- une troisième liaison pivot raccordant le mécanisme de colonne vertébrale à l'ensemble de bassin, la troisième liaison pivot autorisant une rotation de l'ensemble de bassin par rapport à l'ensemble de dos, lors d'un mouvement relatif d'inclinaison latérale du rachis de l'utilisateur par rapport au bassin de l'utilisateur,
- un troisième organe propre à générer un troisième couple tendant à s'opposer à la rotation de l'ensemble de bassin par rapport à l'ensemble de dos lors du mouvement relatif d'inclinaison latérale du rachis par rapport au bassin, et
dans laquelle le mécanisme de colonne vertébrale comprend une quatrième liaison pivot autorisant une rotation de l'ensemble de dos par rapport à l'ensemble de bassin, lors d'un mouvement de torsion du rachis.

La structure d'exosquelette proposée permet de transférer la charge s'exerçant sur l'ensemble de dos vers le premier ensemble de membre inférieur et vers le deuxième ensemble de membre inférieur, tout en étant compatible avec les degrés de liberté du bassin, du rachis (c'est-à-dire de la colonne vertébrale) et des épaules qui sont sollicités lors de la marche ou de la course.

Les degrés de mobilités procurés par la première liaison pivot, la deuxième liaison pivot et la troisième liaison pivot permettent de concevoir une structure dans laquelle la charge est transférée en alternance sur le premier membre inférieur de l'utilisateur puis sur le deuxième membre inférieur de l'utilisateur, pendant la marche ou la course.

En particulier, la troisième liaison pivot autorise une oscillation du mécanisme de colonne vertébrale par rapport à l'ensemble de bassin (mouvement d'oscillation qui se produit naturellement pendant la marche ou la course), tandis que le troisième organe s'oppose au couple généré par la charge et s'exerçant sur l'ensemble de dos du fait de la présence de la troisième liaison pivot. Le troisième organe permet ainsi d'éviter que ce couple soit transféré à la colonne vertébrale de l'utilisateur.

En outre, la quatrième liaison pivot autorise un mouvement de torsion alternatif du rachis qui accompagne le mouvement du dos par rapport au bassin.

La structure d'exosquelette proposée peut en outre présenter les caractéristiques suivantes :
- la structure d'exosquelette comprend un premier organe propre à générer un premier couple tendant à s'opposer à la rotation du premier ensemble de membre inférieur par rapport à l'ensemble de bassin lors d'un mouvement d'adduction du premier membre inférieur,
- la structure d'exosquelette comprend un deuxième organe propre à générer un deuxième couple tendant à s'opposer à la rotation du deuxième ensemble de membre inférieur par rapport à l'ensemble de bassin lors d'un mouvement d'adduction du deuxième membre inférieur,
- le premier organe ou le deuxième organe ou le troisième organe comprend un élément élastique de rappel entre le premier ensemble de membre inférieur ou le deuxième ensemble de membre inférieur ou l'ensemble de dos et l'ensemble de bassin, l'élément élastique de rappel générant une force de rappel tendant à s'opposer à la rotation du premier ensemble de membre inférieur ou du deuxième ensemble de membre inférieur ou de l'ensemble de dos par rapport à l'ensemble de bassin,
- l'élément élastique de rappel comprend une pièce en forme de spirale ayant une première extrémité reliée à l'ensemble de bassin et une deuxième extrémité, opposée à la première extrémité, propre à être sollicitée par le premier ensemble de membre inférieur ou le deuxième ensemble de membre inférieur ou l'ensemble de dos lors de la rotation du premier ensemble de membre inférieur ou du deuxième ensemble de membre inférieur ou de l'ensemble de dos par rapport à l'ensemble de bassin,
- la structure d'exosquelette comprend une première butée propre à être fixée sur l'ensemble de bassin de sorte que dans une première plage angulaire de rotation du premier ensemble de membre inférieur ou du deuxième ensemble de membre inférieur par rapport à l'ensemble de bassin, l'élément élastique de rappel vient en butée contre la première butée et exerce, via la première butée, sur le premier ensemble de membre inférieur ou le deuxième ensemble de membre inférieur une force de rappel tendant à s'opposer au mouvement d'adduction du membre inférieur, et dans une deuxième plage angulaire, l'élément élastique de rappel n'est plus en butée contre la première butée et n'exerce plus de force de rappel sur l'ensemble de membre inférieur,
- la structure d'exosquelette comprend des moyens de réglage de la position de première la butée par rapport à l'ensemble de bassin permettant d'ajuster un angle de transition entre la première plage angulaire et la deuxième plage angulaire,
- les moyens de réglage de la position de la première butée comprennent une lumière et un pion monté coulissant à l'intérieur de la lumière,
- la structure d'exosquelette une deuxième butée fixée sur l'ensemble de membre inférieur et propre à solliciter l'élément élastique de rappel pour exercer une précontrainte élastique sur l'élément élastique de rappel,
- la structure d'exosquelette comprend des moyens de réglage de la position de deuxième la butée par rapport à l'ensemble de membre inférieur,
- le mécanisme de colonne vertébrale comprend une pièce inférieure de colonne vertébrale reliée à l'ensemble de bassin via la troisième liaison pivot et une pièce supérieure de colonne vertébrale reliée à l'ensemble de dos via une cinquième liaison rotule autorisant une rotation de l'ensemble de dos par rapport au mécanisme de colonne vertébrale lors d'un mouvement d'inclinaison latérale et lors d'un mouvement de flexion/extension du rachis de l'utilisateur,
- la pièce supérieure de colonne vertébrale est propre à coulisser longitudinalement par rapport à la pièce inférieure de colonne vertébrale, le mécanisme de colonne vertébrale comprenant en outre un organe de rappel élastique propre à générer une force de rappel élastique tendant à s'opposer au coulissement de la pièce supérieure de colonne vertébrale par rapport à la pièce inférieure de colonne vertébrale lors d'une compression verticale du rachis de l'utilisateur,
- le dispositif d'amortissement comprend un cylindre et un piston propre à coulisser à l'intérieur du cylindre, l'un du piston et du cylindre étant monté fixe par rapport à la pièce supérieure de colonne vertébrale et l'autre du piston et du cylindre étant monté fixe par rapport à la pièce inférieure de colonne vertébrale,
- la pièce supérieure de colonne vertébrale est reliée à la pièce inférieure de colonne vertébrale par la quatrième liaison pivot autorisant une rotation de la pièce supérieure de colonne vertébrale par rapport à la pièce inférieure de colonne vertébrale autour d'un axe longitudinal du mécanisme de colonne vertébrale lors du mouvement de torsion du rachis de l'utilisateur,
- la structure d'exosquelette comprend des moyens de réglage autorisant un réglage d'une distance entre la première liaison pivot et la deuxième liaison pivot,
- les moyens de réglage comprennent une ou plusieurs lumière(s) et un ou plusieurs pion(s) monté(s) coulissant(s) à l'intérieur de la ou des lumière(s).

### PRESENTATION DES DESSINS

D'autres caractéristiques et avantage de l'invention ressortiront encore de la description qui suit, laquelle est purement illustrative et non limitative, et doit être lue en regard des figures annexées, parmi lesquelles :
- la figure 1 représente de manière schématique, en vue de face, une structure d'exosquelette conforme à un mode de réalisation de l'invention,
- la figure 2 représente de manière schématique une partie arrière de la structure d'exosquelette de la figure 1,
- les figures 3 et 4 représente de manière schématique la première liaison pivot, la deuxième liaison pivot et la troisième liaison pivot de la structure d'exosquelette,
- la figure 5 représente de manière schématique la première liaison pivot, la deuxième liaison pivot et la troisième liaison pivot de la structure d'exosquelette, lorsque la troisième liaison pivot est en position initiale,
- la figure 6 représente de manière schématique la première liaison pivot, la deuxième liaison pivot et la troisième liaison pivot de la structure d'exosquelette, lorsque la troisième liaison pivot est en position inclinée,
- les figures 7 à 9 représentent de manière schématique, la première liaison pivot, le premier organe de génération de couple, un mécanisme de réglage de précontrainte et un mécanisme de réglage de position de butée associé,
- la figure 10 représente de manière schématique des moyens de réglage de la distance entre la première liaison pivot et la deuxième liaison pivot.

### DESCRIPTION DETAILLEE D'UN MODE DE REALISATION

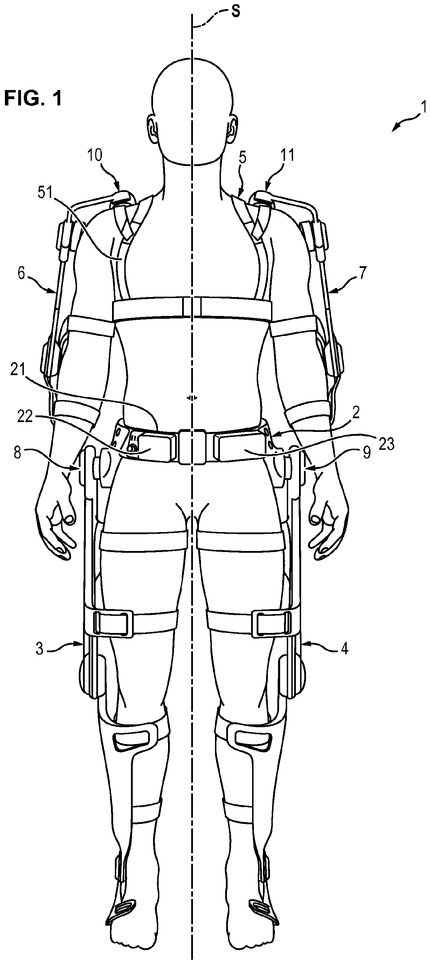

Sur la figure 1, la structure d'exosquelette 1 représentée comprend un ensemble de bassin 2, un premier ensemble de membre inférieur 3, un deuxième ensemble de membre inférieur 4, un ensemble de dos 5, un premier ensemble de membre supérieur 6 et un deuxième ensemble de membre supérieur 7.

L'ensemble de bassin 2 comprend une ceinture lombaire 21 propre à entourer le bassin d'un utilisateur pour attacher l'ensemble de bassin au bassin de l'utilisateur. L'ensemble de bassin 2 peut en outre comprendre une unité de commande 22 et une batterie 23, fixées à la ceinture lombaire 21. L'unité de commande 22 est configurée pour commander différents actionneurs de la structure d'exosquelette 1. La batterie 23 est propre à alimenter les différents actionneurs en énergie électrique.

Le premier ensemble de membre inférieur 3 est propre à être fixé à un premier membre inférieur de l'utilisateur, par exemple au membre inférieur droit (ou jambe droite). Le premier ensemble de membre inférieur 3 peut comprendre des sangles de fixation pour fixer le premier ensemble de membre inférieur 3 au premier membre inférieur.

Le deuxième ensemble de membre inférieur 4 est propre à être fixé à un deuxième membre inférieur de l'utilisateur, par exemple au membre inférieur gauche (ou jambe gauche). Le deuxième ensemble de membre inférieur 4 peut comprendre des sangles de fixation pour fixer le deuxième ensemble de membre inférieur 4 au deuxième membre inférieur. Le deuxième ensemble de membre inférieur 4 est symétrique du premier ensemble de membre inférieur 3, par rapport à un plan sagittal S de l'utilisateur lorsque l'utilisateur se trouve en position anatomique de référence.

Par « position anatomique de référence », on désigne la position de l'utilisateur lorsque celui-ci se tient debout sur un sol horizontal, les bras pendants le long du corps, les avant-bras et les mains en supination, conformément au système de référence en anatomie. Le plan sagittal S est le plan qui sépare la moitié gauche de la moitié droite du corps.

Le premier ensemble de membre supérieur 6 est propre à être fixé à un premier membre supérieur de l'utilisateur, par exemple au membre supérieur droit (ou bras droit). Le premier ensemble de membre supérieur 6 comprendre des sangles de fixation pour fixer le premier ensemble de membre supérieur 6 au premier membre supérieur.

Le deuxième ensemble de membre supérieur 7 est propre à être fixé à un deuxième membre supérieur de l'utilisateur, par exemple au membre supérieur gauche (ou bras gauche). Le deuxième ensemble de membre supérieur 6 comprendre des sangles de fixation pour fixer le deuxième ensemble de membre supérieur 6 au deuxième membre supérieur.

L'ensemble de dos 5 comprend un harnais 53 propre à être attaché au thorax de l'utilisateur. A cet effet, le harnais 53 peut comprendre un ensemble de sangles permettant d'attacher l'ensemble de dos 5 au thorax.

La structure d'exosquelette 1 comprend en outre une première articulation de hanche 8 reliant le premier ensemble de membre inférieur 3 à l'ensemble de bassin 2 et une deuxième articulation de hanche 9 reliant le deuxième ensemble de membre inférieur 4 à l'ensemble de bassin 2.

La structure d'exosquelette 1 comprend en outre une première articulation d'épaule 10 reliant le premier ensemble de membre supérieur 6 à l'ensemble de dos 5 et une deuxième articulation d'épaule 11 reliant le deuxième ensemble de membre supérieur 7 à l'ensemble de dos 5.

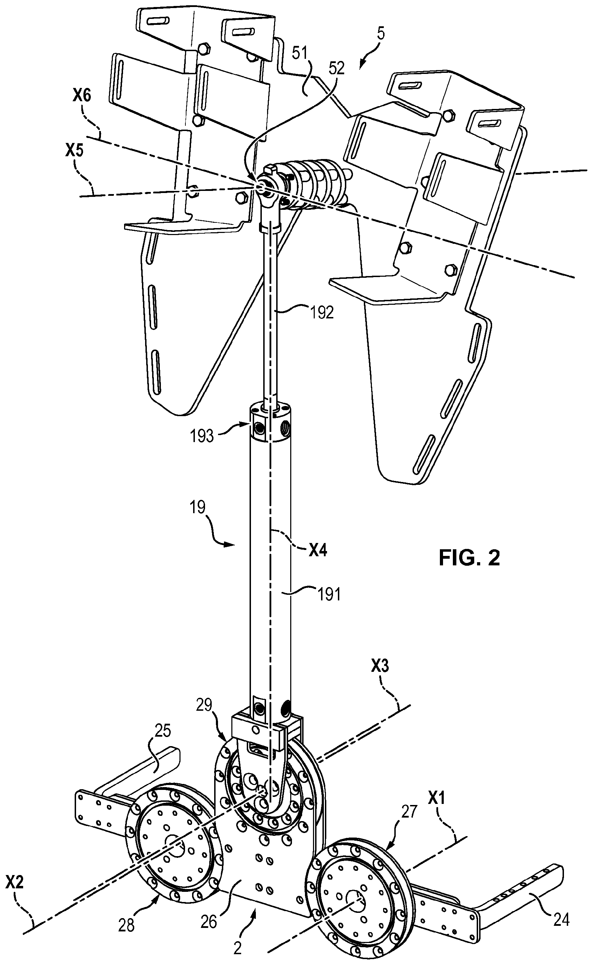

Comme illustré sur la figure 2, la structure d'exosquelette 1 comprend en outre un mécanisme de colonne vertébrale 19 s'étendant le long du rachis de l'utilisateur. Le mécanisme de colonne vertébrale 19 relie l'ensemble de dos 5 à l'ensemble de bassin 2. Le mécanisme de colonne vertébrale 19 permet de transférer une charge s'exerçant sur l'ensemble de dos 5 vers l'ensemble de bassin 2, par exemple le poids d'un sac à dos.

L'ensemble de bassin 2 comprend une première pièce de hanche 24, une deuxième pièce de hanche 25, une pièce de bassin 26, une première liaison pivot 27, une deuxième liaison pivot 28 et une troisième liaison pivot 29.

La pièce de bassin 26 est fixée à la ceinture lombaire 21.

La première pièce de hanche 24 est raccordée à l'une de ses extrémités au premier ensemble de membre inférieur 3 via la première articulation de hanche 8 et à l'autre de ses extrémités à la pièce de bassin 26 via la première liaison pivot 27. La première liaison pivot 27 autorise une rotation du premier ensemble de membre inférieur 3 par rapport à l'ensemble de bassin 2 lors d'un mouvement d'abduction ou d'adduction du premier membre inférieur. A cet effet, la première liaison pivot 27 autorise une rotation de la première pièce de hanche 24 par rapport à la pièce de bassin 26 autour d'un premier axe de rotation X1 horizontal et parallèle au plan sagittal de l'utilisateur, lorsque l'utilisateur se trouve en position anatomique de référence.

La deuxième pièce de hanche 25 est raccordée à l'une de ses extrémités au deuxième ensemble de membre inférieur 4 via la deuxième articulation de hanche 9 et à l'autre de ses extrémités à la pièce de bassin 26 via la deuxième liaison pivot 28. La deuxième liaison pivot 28 autorise une rotation du deuxième ensemble de membre inférieur 4 par rapport à l'ensemble de bassin 2 lors d'un mouvement d'abduction ou d'adduction du deuxième membre inférieur. A cet effet, la deuxième liaison pivot 28 autorise une rotation de la deuxième pièce de hanche 25 par rapport à la pièce de bassin 26 autour d'un deuxième axe de rotation X2 horizontal et parallèle au plan sagittal de l'utilisateur, lorsque l'utilisateur se trouve en position anatomique de référence. Le deuxième axe de rotation X2 est parallèle au premier axe de rotation X1.

Le mécanisme de colonne vertébrale 19 comprend une pièce inférieure de colonne vertébrale 191, une pièce supérieure de colonne vertébrale 192 et une quatrième liaison pivot 193.

La pièce inférieure de colonne vertébrale 191 est reliée à l'ensemble de bassin 2 via la troisième liaison pivot 29. La troisième liaison pivot 29 autorise une rotation de l'ensemble de bassin 2 par rapport à l'ensemble de dos 5, lors d'un mouvement d'inclinaison latérale du bassin de l'utilisateur par rapport au rachis de l'utilisateur. A cet effet, la troisième liaison pivot 29 autorise une rotation de la pièce de bassin 26 par rapport à la pièce inférieure de colonne vertébrale 191 autour d'un troisième axe de rotation X3, horizontal et parallèle au plan sagittal de l'utilisateur, lorsque l'utilisateur se trouve en position anatomique de référence. Le troisième axe de rotation X3 est parallèle au premier axe de rotation X1 et au deuxième axe de rotation X2.

La pièce supérieure de colonne vertébrale 192 est montée coulissante par rapport à la pièce inférieure de colonne vertébrale 191 le long d'un axe longitudinal X4 du mécanisme de colonne vertébrale 19. En outre, la quatrième liaison pivot 193 autorise une rotation de l'ensemble de dos 5 par rapport à l'ensemble de bassin 2 lors d'un mouvement de torsion du rachis de l'utilisateur. A cet effet, la quatrième liaison pivot 193 autorise une rotation de la pièce supérieure de colonne vertébrale 192 par rapport à la pièce inférieure de colonne vertébrale 191 autour de l'axe longitudinal X4.

Le mécanisme de colonne vertébrale 19 comprend en outre un organe de rappel élastique propre à générer une force de rappel élastique s'opposant au coulissement de la pièce supérieure de colonne vertébrale 192 par rapport à la pièce inférieure de colonne vertébrale 191. Plus précisément, l'organe de rappel élastique est propre à exercer sur la pièce supérieure de colonne vertébrale 192 une force de rappel proportionnelle au déplacement relatif de la pièce supérieure de colonne vertébrale 192 par rapport à la pièce inférieure de colonne vertébrale 191 lors d'une compression axiale du rachis. L'organe de rappel élastique peut comprendre un cylindre et un piston propre à coulisser à l'intérieur du cylindre, l'un du piston et du cylindre étant monté fixe par rapport à la pièce supérieure de colonne vertébrale 192 et l'autre du piston et du cylindre étant monté fixe par rapport à la pièce inférieure de colonne vertébrale 191. Le piston et le cylindre délimitent une chambre contenant de l'air sous pression (c'est-à-dire dont la pression est supérieure à la pression atmosphérique). Lors d'un déplacement axial de la pièce supérieure de colonne vertébrale 192 par rapport à la pièce inférieure de colonne vertébrale 191 tendant à comprimer le rachis, l'air contenu dans la chambre est comprimé par le piston. Il en résulte que l'air comprimé exerce sur le piston la force de rappel tendant à s'opposer à la compression du rachis. La raideur de l'organe de rappel élastique peut être ajustée en faisant varier la quantité d'air présente dans la chambre et/ou le volume de la chambre. Cela permet également d'ajuster la longueur du mécanisme de colonne vertébrale en fonction de la taille de l'utilisateur.

L'ensemble de dos 5 comprend une pièce de support 51 sur laquelle peut être fixée une charge à porter, par exemple un sac à dos, et une cinquième liaison rotule 52.

La pièce supérieure de colonne vertébrale 192 est reliée à la pièce de support 51 via la cinquième liaison rotule 52. La cinquième liaison rotule 52 autorise d'une part, une rotation de l'ensemble de dos 5 par rapport à l'ensemble de bassin 2 lors d'un mouvement d'inclinaison latérale des épaules de l'utilisateur par rapport au rachis. A cet effet, la cinquième liaison rotule 52 autorise une rotation de la pièce de support 51 par rapport à la pièce supérieure de colonne vertébrale 192 autour d'un cinquième axe de rotation X5. Le cinquième axe de rotation X5 est horizontal et parallèle au plan sagittal de l'utilisateur, lorsque l'utilisateur se trouve en position anatomique de référence. Ainsi, le cinquième axe de rotation X5 est parallèle au troisième axe de rotation X3 lorsque l'utilisateur se trouve en position anatomique de référence.

La cinquième liaison rotule 52 autorise d'autre part, une rotation de l'ensemble de dos 5 par rapport à l'ensemble de bassin 2 lors d'un mouvement de flexion/extension du rachis de l'utilisateur. A cet effet, la cinquième liaison rotule 52 autorise une rotation de la pièce de support 51 par rapport à la pièce supérieure de colonne vertébrale 192 autour d'un sixième axe de rotation X6. Le sixième axe de rotation X6 est horizontal et perpendiculaire au plan sagittal de l'utilisateur, lorsque l'utilisateur se trouve en position anatomique de référence.

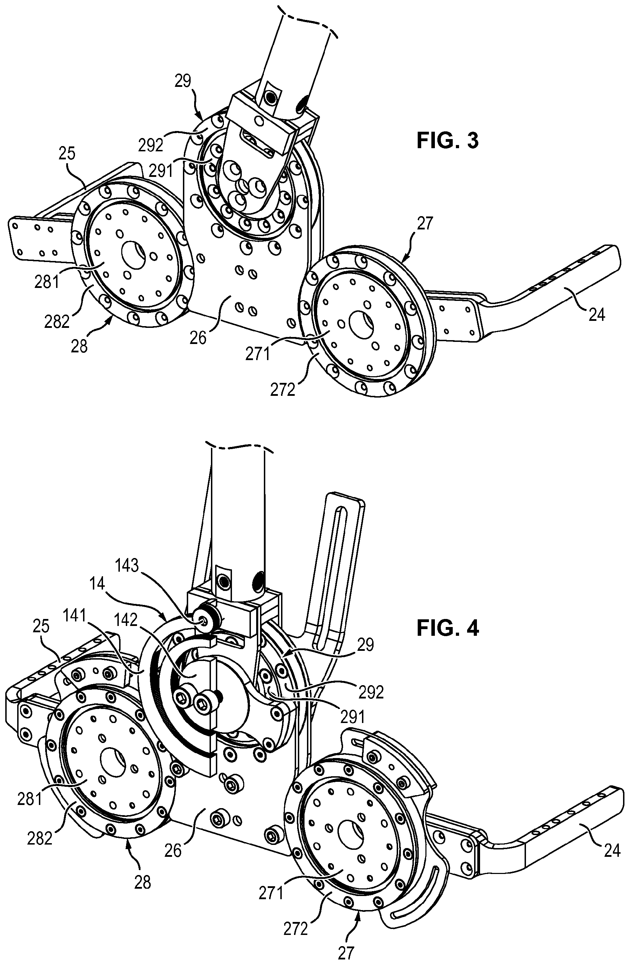

Les figures 3 et 4 illustrent plus en détails la première liaison pivot 27, la deuxième liaison pivot 28 et la troisième liaison pivot 29.

La première liaison pivot 27 comprend un premier rotor 271 et un premier stator 272. Le premier rotor 271 est monté fixe sur la première pièce de hanche 24. Le premier stator 272 est monté fixe sur la pièce de bassin 26.

La deuxième liaison pivot 28 comprend un deuxième rotor 281 et un deuxième stator 282. Le deuxième rotor 281 est monté fixe sur la deuxième pièce de hanche 25. Le deuxième stator 282 est monté fixe sur la pièce de bassin 26.

La troisième liaison pivot 29 comprend un troisième rotor 291 et un troisième stator 292. Le troisième rotor 291 est monté fixe sur la pièce inférieure de colonne vertébrale 191. Le deuxième stator 292 est monté fixe sur la pièce de bassin 26.

Par ailleurs, la structure d'exosquelette 1 comprend un premier organe 12 propre à générer un premier couple tendant à s'opposer à la rotation du premier rotor 271 par rapport au premier stator 272 lors d'un mouvement d'abduction ou d'adduction du premier membre inférieur.

La structure d'exosquelette 1 comprend également un deuxième organe 13 propre à générer un deuxième couple tendant à s'opposer à la rotation du deuxième rotor 281 par rapport au deuxième stator 282 lors d'un mouvement d'abduction ou d'adduction du deuxième membre inférieur.

La structure d'exosquelette comprend également un troisième organe 14 propre à générer un troisième couple tendant à s'opposer à la rotation du troisième rotor 291 par rapport au troisième stator 292 lors du mouvement d'inclinaison latérale du bassin.

Le premier organe 12, le deuxième organe 13 ou le troisième organe 14 peut être un organe actif (c'est-à-dire un actionneur nécessitant une alimentation en énergie électrique pour générer le premier couple, tel qu'un moteur électrique par exemple) ou un organe passif (c'est-à-dire qui ne nécessite pas une alimentation en énergie électrique, tel qu'un ressort par exemple).

Dans l'exemple illustré sur les figures 4 à 6, le troisième organe 14 comprend un ou plusieurs élément(s) élastique(s) de rappel 141 reliant l'ensemble de dos 5 à l'ensemble de bassin. Une rotation de l'ensemble de bassin 2 par rapport à l'ensemble de dos 5 entraine une déformation du ou des élément(s) élastique(s) de rappel 141, cette déformation ayant pour effet que l'élément élastique de rappel 141 génère un couple de rappel tendant à s'opposer à cette rotation.

Dans l'exemple illustré sur les figures 4 à 6, l'élément élastique de rappel 141 comprend une pièce en forme de spirale 140 ayant une première extrémité 142 (au centre de la spirale) reliée à l'ensemble de bassin 2 et une deuxième extrémité 143 (éloignée du centre de la spirale), opposée à la première extrémité 142, reliée au mécanisme de colonne vertébrale 19. Plus précisément, la première extrémité 142 est fixée au troisième stator 292 et la deuxième extrémité 143 est fixée au troisième rotor 291.

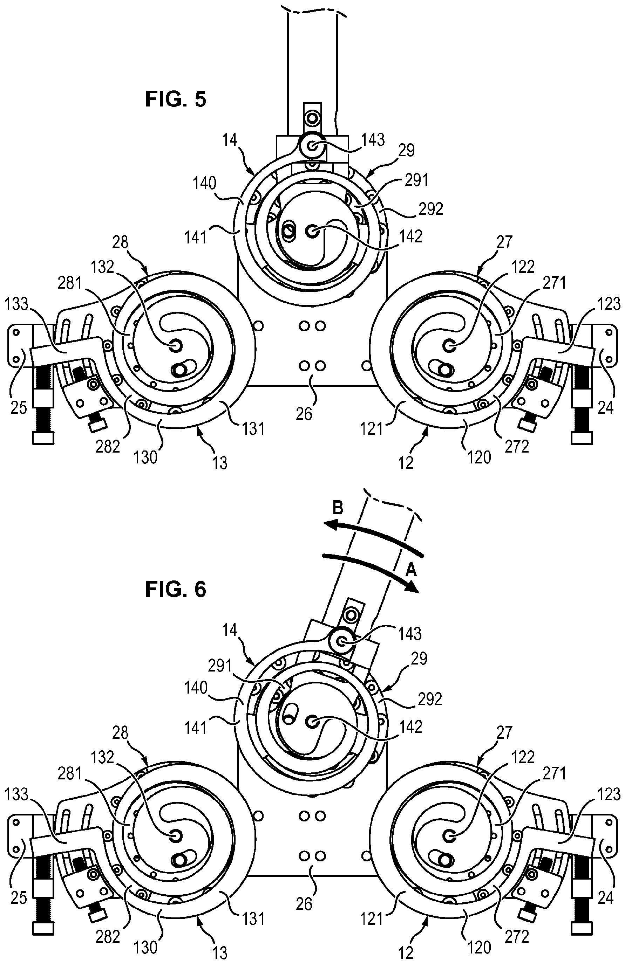

La figure 5 montre l'élément élastique de rappel 141 lorsque l'utilisateur se trouve en position anatomique de référence. Dans cette position, l'élément élastique de rappel 141 n'exerce aucun couple.

La figure 6 montre l'élément élastique de rappel 141 lorsque l'utilisateur incline latéralement le rachis par rapport au bassin. La pièce en forme de spirale 140 est agencée de sorte qu'une rotation de l'ensemble de dos 5 par rapport à l'ensemble de bassin 2 dans un premier sens (flèche A) entraine un enroulement de la pièce en forme de spirale 140, et la rotation de l'ensemble de dos 5 par rapport à l'ensemble de bassin 2 dans un deuxième sens (flèche B), opposé au premier sens, entraine un déroulement de la pièce en forme de spirale 140.

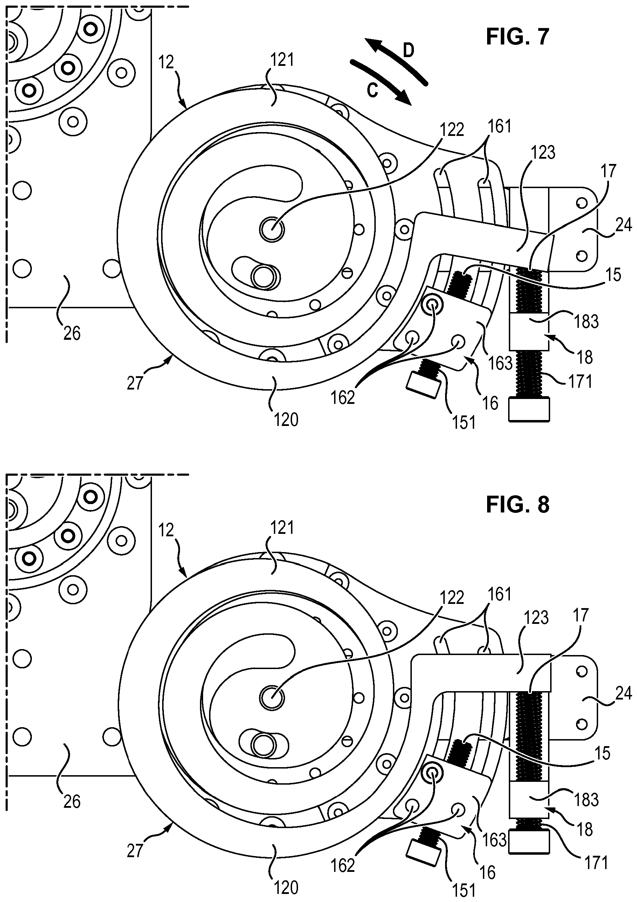

Les figures 7 à 9 illustrent plus en détails la première liaison pivot 27.

Dans l'exemple illustré sur les figures 7 à 9, le premier organe 12 comprend un élément élastique de rappel 121 reliant le premier ensemble de membre inférieur 3 à l'ensemble de bassin 2. Une rotation du premier ensemble de membre inférieur 3 par rapport à l'ensemble de bassin 2 entraine une déformation de l'élément élastique 121, la déformation ayant pour effet que l'élément élastique de rappel 121 génère un couple de rappel tendant à s'opposer à cette rotation.

Dans l'exemple illustré sur les figures 7 à 9, l'élément élastique de rappel 121 comprend une pièce en forme de spirale 120 ayant une première extrémité 122 (au centre de la spirale) reliée à l'ensemble de bassin 2 et une deuxième extrémité 123 (éloignée du centre de la spirale), opposée à la première extrémité 122, et propre à être sollicitée par le premier ensemble de membre inférieur 3 lors d'une rotation relative de l'ensemble de bassin 2 par rapport au premier ensemble de membre inférieur 3. Plus précisément, la première extrémité 122 est fixée au premier rotor 271, solidaire de la première pièce de hanche 24.

La figure 7 montre l'élément élastique de rappel 121 lorsque l'utilisateur se trouve en position anatomique de référence. Dans cette position, l'élément élastique de rappel 121 n'exerce aucun couple.

Lors d'un mouvement d'abduction ou d'adduction du premier membre inférieur, le premier ensemble de membre inférieur 3 est entrainé en rotation par rapport à l'ensemble de bassin 2. Cela a pour effet de déformer l'élément élastique de rappel 121 de sorte que l'élément élastique de rappel 121 génère un couple de rappel tendant à s'opposer à cette rotation.

La pièce en forme de spirale 120 est agencée de sorte qu'une rotation de l'ensemble de membre inférieur 3 par rapport à l'ensemble de bassin 2 dans un premier sens de rotation correspondant à un mouvement d'adduction (flèche C) entraine un enroulement de la pièce en forme de spirale 120, et la rotation de l'ensemble de membre inférieur 3 par rapport à l'ensemble de bassin 2 dans un deuxième sens correspondant à un mouvement d'abduction (flèche D), opposé au premier sens entraine un déroulement de la pièce en forme de spirale 120.

Par ailleurs, la structure d'exosquelette 1 comprend une première butée 15 propre à être fixée sur l'ensemble de bassin 2 de sorte que :
- dans une première plage angulaire de rotation du premier ensemble de membre inférieur 3 par rapport à l'ensemble de bassin 2, l'organe élastique de rappel 121 vient en butée contre la première butée 15 et exerce, via la première butée 15, sur le premier ensemble de membre inférieur 3 une force de rappel tendant à s'opposer au mouvement d'adduction du membre inférieur, et
- dans une deuxième plage angulaire, l'organe élastique de rappel 121 n'est plus en butée contre la première butée 15 et n'exerce plus de force de rappel sur l'ensemble de membre inférieur.

La première butée 15 peut comprendre une vis 151 fixée à la pièce de bassin 26 de sorte que l'extrémité de la vis 151 vient solliciter la deuxième extrémité 123 de la pièce en forme de spirale 120 uniquement dans la première plage angulaire.

La structure d'exosquelette 1 comprend en outre des moyens de réglage 16 autorisant un réglage de la position de première la butée 15 par rapport à l'ensemble de bassin 2. Les moyens de réglage 16 comprennent une ou plusieurs lumière(s) 161 fixes par rapport à la pièce de bassin 26 et un ou plusieurs pion(s) 162 monté(s) coulissant à l'intérieur de la ou des lumière(s) 161. Plus précisément, les moyens de réglage 16 comprennent une première pièce de réglage 163 présentant un orifice traversant présentant un filetage interne. La vis 151 est vissée dans l'orifice. Les pions 162 sont montés fixes sur la première pièce de réglage 163. La position de la première pièce de réglage 163 peut être modifiée en faisant coulisser les pions 162 dans les lumières 161. Les lumières 161 peuvent être ménagées dans le stator 272 de la première liaison pivot 27. Dans l'exemple illustré sur les figures 7 à 9, les moyens de réglage 16 comprennent deux lumières 161 et trois pions 162 montés coulissant à l'intérieur des lumières 161 pour guider le déplacement de la première pièce de réglage 163 par rapport à la pièce de bassin 26. Les pions 162 peut être constitués par des vis.

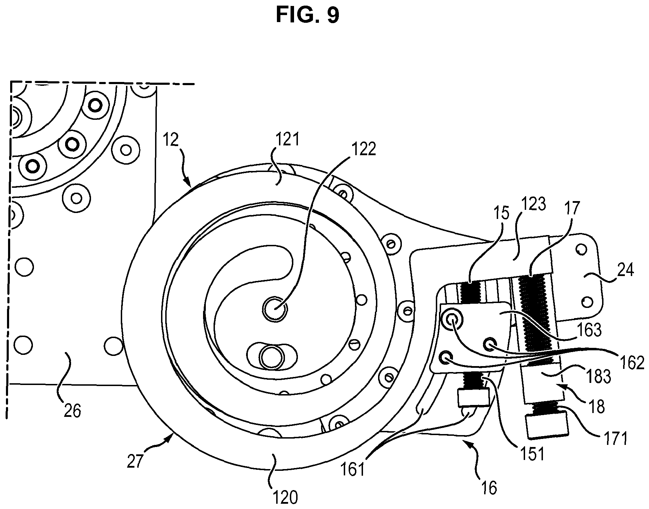

Comme illustré sur la figure 9, les moyens de réglage 16 permettent de modifier la limite entre la première et la deuxième plage angulaires, en ajustant la position de la pièce de réglage 163 par rapport à l'ensemble de bassin 2 et en ajustant la position de la vis 151 dans l'orifice fileté.

La structure d'exosquelette 1 comprend en outre une deuxième butée 17 fixée sur le premier ensemble de membre inférieur 3 et propre à solliciter l'organe élastique de rappel 121 de manière à exercer une précontrainte élastique sur l'organe élastique de rappel 121. La deuxième butée 17 peut comprendre une vis 171 fixée à la pièce de hanche 24 de sorte que l'extrémité de la vis 171 vient solliciter en permanence la deuxième extrémité 123 de la pièce en forme de spirale 120.

La structure d'exosquelette 1 comprend en outre des moyens de réglage 18 de la position de deuxième la butée 17 par rapport au premier ensemble de membre inférieur 3. Les moyens de réglage 18 comprennent une deuxième pièce de réglage 183 montée fixe sur la première pièce de hanche 24. La deuxième pièce de réglage 183 présente un orifice traversant présentant un filetage interne. La vis 171 est vissée dans l'orifice.

Comme illustré sur la figure 8, les moyens de réglage 18 permettent de modifier la précontrainte exercée sur l'organe élastique de rappel 121, en ajustant la position de la vis 171 dans l'orifice fileté.

Il est à noter que la deuxième liaison pivot 28 comprend des pièces similaires à celles de la première liaison pivot 27, les pièces de la deuxième liaison pivot 28 étant agencées de manière symétrique des pièces de la première liaison pivot 27 par rapport au plan sagittal de l'utilisateur. En particulier, la structure d'exosquelette 1 comprend un deuxième organe élastique de rappel 131, agencé de manière symétrique au premier organe élastique de rappel 121, ainsi qu'une première butée et une deuxième butée.

L'organe élastique de rappel 131 comprend une pièce en forme de spirale 130 ayant une première extrémité 132 (au centre de la spirale) reliée à l'ensemble de bassin 2 et une deuxième extrémité 133 (éloignée du centre de la spirale), opposée à la première extrémité 132, et propre à être sollicitée par le deuxième ensemble de membre inférieur 4 lors d'une rotation relative de l'ensemble de bassin 2 par rapport au deuxième ensemble de membre inférieur 4. Plus précisément, la première extrémité 132 est fixée au deuxième rotor 281, solidaire de la deuxième pièce de hanche 25.

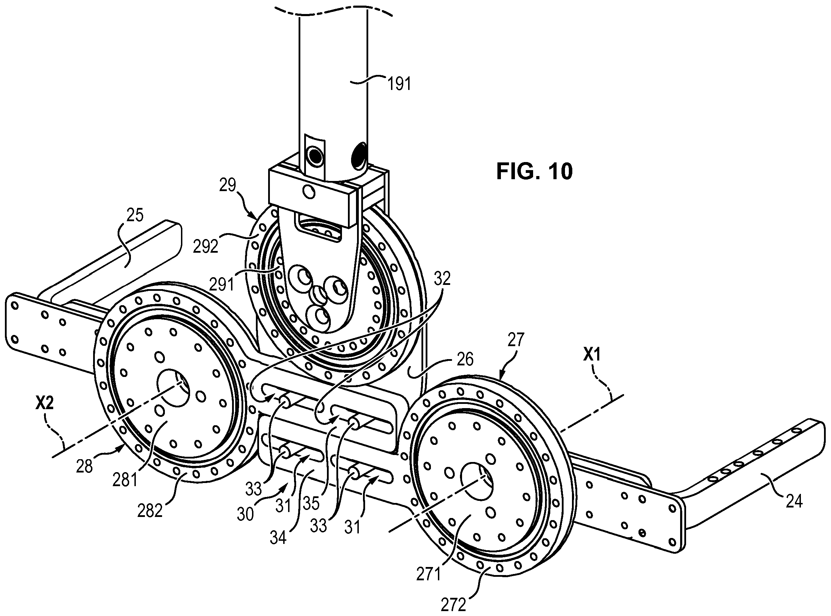

Comme illustré sur la figure 10, la structure d'exosquelette 1 comprend en outre des moyens de réglage 30 autorisant un réglage de la distance entre le premier axe de rotation X1 et le deuxième axe de rotation X2.

Dans l'exemple illustré sur la figure 10, les moyens de réglage 30 comprennent une ou plusieurs lumière(s) 31 fixes par rapport stator 272 de la première liaison pivot 27, une ou plusieurs lumière(s) 32 fixes par rapport stator 282 de la deuxième liaison pivot 28, et un ou plusieurs pion(s) 33 montés fixes par rapport à la pièce de bassin 26. Le ou les pion(s) 33 est (sont) monté(s) coulissants à l'intérieur des lumières 31 et 32. Plus précisément, les moyens de réglage 30 comprennent une première pièce de réglage 34 fixée au premier stator 272. La première pièce de réglage 34 présente deux lumières 31 horizontales. De même, les moyens de réglage 30 comprennent une deuxième pièce de réglage 35 fixée au deuxième stator 282. La deuxième pièce de réglage 35 présente également deux lumières 32 horizontales. Les moyens de réglage 30 comprennent deux premiers pions 33 fixés à la pièce de bassin 26, chacun des premiers pions étant apte à coulisser à l'intérieur d'une première lumière 31 respective pour déplacer la première liaison pivot 27 par rapport à l'ensemble de bassin 2 selon une direction perpendiculaire aux axes X1 et X2. Les moyens de réglage 30 comprennent deux deuxièmes pions 33 fixés à la pièce de bassin 26, chacun des deuxièmes pions étant apte à coulisser à l'intérieur d'une deuxième lumière 32 respective pour déplacer la deuxième liaison pivot 28 par rapport à l'ensemble de bassin 2 selon une direction perpendiculaire aux axes X1 et X2.

Les moyens de réglage 30 permettent ainsi d'ajuster l'écartement entre les axes de rotations X1 et X2, de manière à ce que ces axes soient alignés avec les têtes fémorales de l'utilisateur, de manière à correspondre aux axes d'abduction/adduction des hanches de l'utilisateur.

Enfin, la structure d'exosquelette 1 peut également comprendre des dispositifs d'amortissement disposés en parallèle des liaison pivot 27, 28, 29, 193 et de la liaison rotule 52 pour amortir le mouvement des différentes pièces les unes par rapport aux autres. Dans le cas où les organes 12, 13 et 14 sont des organes actifs, tels que des moteurs électriques par exemple, ces organes peuvent jouer le rôle de dispositifs d'amortissement pour les liaisons pivots 27, 28 et 29.

En fonctionnement, lorsque l'utilisateur marche, l'utilisateur s'appuie alternativement sur son premier membre inférieur (jambe droite) et sur son deuxième membre inférieur (jambe gauche), ce qui provoque une légère oscillation du mécanisme de colonne vertébrale 19 par rapport à l'ensemble de bassin 2.

Au cours d'une première phase du cycle de marche, lorsque l'utilisateur appuie sur son premier membre inférieur (jambe droite), la charge générée par le poids du sac à dos a pour effet d'affaisser le bassin du côté gauche. La pièce inférieure de colonne vertébrale 191 a par conséquent tendance à pivoter par rapport à la pièce de bassin 26, selon le premier sens de rotation (flèche A), autour du troisième axe de rotation X3.

La rotation de la pièce inférieure de colonne vertébrale 191 dans le premier sens a pour effet de déformer le troisième organe élastique de rappel 141, qui génère un couple tendant à entrainer en rotation l'ensemble de bassin 2 par rapport au premier ensemble de membre inférieur 3 (dans le sens de la flèche C) et par rapport au deuxième ensemble de membre inférieur 4.

L'action du premier organe élastique de rappel 121 et du deuxième organe élastique de rappel 131 a pour effet que la totalité de la charge ou une partie de la charge générée par le poids du sac à dos s'exerçant sur l'ensemble de dos 5 est transférée par le premier organe élastique de rappel 121 vers le premier ensemble de membre inférieur 3 via la première pièce de hanche 24 et la première articulation de hanche 8.

A l'inverse, la fraction de la charge transmise au deuxième ensemble de membre inférieur 4 est fortement réduite, ce qui permet à l'utilisateur de pouvoir soulever son deuxième membre inférieur du sol sans exercer d'effort excessif.

Au cours d'une deuxième phase du cycle de marche, lorsque l'utilisateur appuie sur son deuxième membre inférieur (jambe gauche), la charge générée par le poids du sac à dos a pour effet d'affaisser le bassin du côté droit. La pièce inférieure de colonne vertébrale 191 a tendance à pivoter par rapport à la pièce de bassin 26, selon le deuxième sens de rotation (flèche B), opposé au premier sens de rotation, autour du troisième axe de rotation X3.

La rotation de la pièce inférieure de colonne vertébrale 191 dans le deuxième sens a pour effet de déformer le troisième organe élastique de rappel 121, qui génère un couple tendant à entrainer en rotation l'ensemble de bassin 2 par rapport au premier ensemble de membre inférieur 3 (dans le sens de la flèche D) et par rapport au deuxième ensemble de membre inférieur 4, en sens inverse.

L'action du premier organe élastique de rappel 121 et du deuxième organe élastique de rappel 131 a pour effet que la totalité de la charge ou une partie de la charge générée par le poids du sac à dos s'exerçant sur l'ensemble de dos 5 est transférée par le deuxième organe élastique de rappel 131 vers le deuxième ensemble de membre inférieur 4 via la deuxième pièce de hanche 25 et la deuxième articulation de hanche 9.

A l'inverse, la fraction de la charge transmise au premier ensemble de membre inférieur 3 est fortement réduite, ce qui permet à l'utilisateur de pouvoir soulever son premier membre inférieur du sol sans exercer d'effort excessif.

Pendant le cycle de marche, la charge est ainsi transférée en alternance vers le premier ensemble de membre inférieur 3 et vers le deuxième ensemble de membre inférieur 4, sans transiter par le bassin de l'utilisateur. Le couple résultant de la déformation des organes élastiques de rappel 121 et 131 permet de supporter la charge du côté du contact au sol, tandis que le côté opposé est libéré de la charge.

Grâce à l'agencement des trois liaisons pivot et des organes de rappel élastique, la charge est toujours transférée vers l'ensemble de membre inférieur qui est en contact avec le sol. L'autre ensemble de membre inférieur ne supporte qu'une fraction réduite de la charge de sorte que l'utilisateur peut facilement soulever le membre inférieur correspondant.

Par ailleurs, lorsque l'utilisateur se tient debout immobile, en position anatomique de référence, le premier ensemble de membre inférieur 3 et le deuxième ensemble de membre inférieur 4 de la structure d'exosquelette 1 sont simultanément en contact avec le sol. Dans cette position, la structure d'exosquelette 1 proposée permet de partager la charge générée par le poids du sac à dos en la répartissant sur les deux ensembles de membre inférieur de façon égale.

## Revendications

1. Structure d'exosquelette (1) comprenant :
- un ensemble de bassin (2) comprenant une ceinture (21) propre à entourer le bassin d'un utilisateur pour attacher l'ensemble de bassin (2) au bassin de l'utilisateur,
- un premier ensemble de membre inférieur (3) propre à être fixé à un premier membre inférieur de l'utilisateur,
- une première liaison pivot (27) raccordant le premier ensemble de membre inférieur (3) à l'ensemble de bassin (2), la première liaison pivot (27) autorisant une rotation du premier ensemble de membre inférieur (3) par rapport à l'ensemble de bassin (2) lors d'un mouvement d'abduction ou d'adduction du premier membre inférieur,
- un premier organe (12) propre à générer un premier couple tendant à s'opposer à la rotation du premier ensemble de membre inférieur (3) par rapport à l'ensemble de bassin (2) lors d'un mouvement d'adduction du premier membre inférieur, le premier organe (12) comprenant un premier élément élastique de rappel (121) entre le premier ensemble de membre inférieur (3) et l'ensemble de bassin (2), le premier élément élastique de rappel (121) générant une force de rappel tendant à s'opposer à la rotation du premier ensemble de membre inférieur (3) par rapport à l'ensemble de bassin (2),
- une première butée (15) propre à être fixée sur l'ensemble de bassin (2) de sorte que dans une première plage angulaire de rotation du premier ensemble de membre inférieur (3), le premier élément élastique de rappel (121) vient en butée contre la première butée et exerce, via la première butée, sur le premier ensemble de membre inférieur (3) une force de rappel tendant à s'opposer au mouvement d'adduction du membre inférieur, et dans une deuxième plage angulaire, le premier élément élastique de rappel (121) n'est plus en butée contre la première butée et n'exerce plus de force de rappel sur l'ensemble de membre inférieur (3),
- un deuxième ensemble de membre inférieur (4) propre à être fixé à un deuxième membre inférieur de l'utilisateur,
- une deuxième liaison pivot (28) raccordant le deuxième ensemble de membre inférieur (4) à l'ensemble de bassin (2), la deuxième liaison pivot (28) autorisant une rotation du deuxième ensemble de membre inférieur (4) par rapport à l'ensemble de bassin (2) lors d'un mouvement d'abduction ou d'adduction du deuxième membre inférieur,
- un ensemble de dos (5) comprenant un harnais (53) propre à être attaché au thorax de l'utilisateur,
- un mécanisme de colonne vertébrale (19) reliant l'ensemble de dos (5) à l'ensemble de bassin (2),
- une troisième liaison pivot (29) raccordant le mécanisme de colonne vertébrale (19) à l'ensemble de bassin (2), la troisième liaison pivot (29) autorisant une rotation de l'ensemble de bassin (2) par rapport à l'ensemble de dos (5), lors d'un mouvement relatif d'inclinaison latérale du rachis de l'utilisateur par rapport au bassin de l'utilisateur,
- un troisième organe (14) propre à générer un troisième couple tendant à s'opposer à la rotation de l'ensemble de bassin par rapport à l'ensemble de dos (5) lors du mouvement relatif d'inclinaison latérale du rachis par rapport au bassin, et
dans laquelle le mécanisme de colonne vertébrale (19) comprend une quatrième liaison pivot (193) autorisant une rotation de l'ensemble de dos (5) par rapport à l'ensemble de bassin (2), lors d'un mouvement de torsion du rachis.

2. Structure d'exosquelette selon la revendication 1, comprenant un deuxième organe (13) propre à générer un deuxième couple tendant à s'opposer à la rotation du deuxième ensemble de membre inférieur (4) par rapport à l'ensemble de bassin (2) lors d'un mouvement d'adduction du deuxième membre inférieur.

3. Structure d'exosquelette selon la revendication 2, dans laquelle le deuxième organe (13) comprend un deuxième élément élastique de rappel (131) entre le deuxième ensemble de membre inférieur (4) et l'ensemble de bassin (2), le deuxième élément élastique de rappel (131) générant une force de rappel tendant à s'opposer à la rotation du deuxième ensemble de membre inférieur (4) par rapport à l'ensemble de bassin (2).

4. Structure d'exosquelette selon l'une des revendications 1 à 3, dans laquelle le troisième organe (14) comprend un troisième élément élastique de rappel (141) entre l'ensemble de dos (5) et l'ensemble de bassin (2), le troisième élément élastique de rappel (141) générant une force de rappel tendant à s'opposer à la rotation de l'ensemble de dos (5) par rapport à l'ensemble de bassin (2).

5. Structure d'exosquelette selon la revendication 4, dans laquelle l'un des éléments élastique de rappel (121, 131, 141) comprend une pièce en forme de spirale (120, 130, 140) ayant une première extrémité (122, 132, 142) reliée à l'ensemble de bassin (2) et une deuxième extrémité (123, 133, 143), opposée à la première extrémité, propre à être sollicitée par le premier ensemble de membre inférieur (3) ou le deuxième ensemble de membre inférieur (4) ou l'ensemble de dos (5) lors de la rotation du premier ensemble de membre inférieur (3) ou du deuxième ensemble de membre inférieur (4) ou de l'ensemble de dos (5) par rapport à l'ensemble de bassin (2).

6. Structure d'exosquelette selon l'une des revendications 4 et 5, comprenant une première butée (15) propre à être fixée sur l'ensemble de bassin (2) de sorte que dans une première plage angulaire de rotation du premier ensemble de membre inférieur (3) ou du deuxième ensemble de membre inférieur (4) par rapport à l'ensemble de bassin (2), l'élément élastique de rappel (121, 131) vient en butée contre la première butée et exerce, via la première butée, sur le premier ensemble de membre inférieur (3) ou le deuxième ensemble de membre inférieur (4) une force de rappel tendant à s'opposer au mouvement d'adduction du membre inférieur, et dans une deuxième plage angulaire, l'élément élastique de rappel (121, 131) n'est plus en butée contre la première butée et n'exerce plus de force de rappel sur l'ensemble de membre inférieur (3, 4).

7. Structure d'exosquelette selon la revendication 6, comprenant des moyens de réglage (16) de la position de première la butée (15) par rapport à l'ensemble de bassin (2) permettant d'ajuster un angle de transition entre la première plage angulaire et la deuxième plage angulaire.

8. Structure d'exosquelette selon la revendication 7, dans lequel les moyens de réglage de la position de la première butée (16) comprennent une lumière (161) et un pion (162) monté coulissant à l'intérieur de la lumière.

9. Structure d'exosquelette selon l'une des revendications 4 à 7, comprenant une deuxième butée (17) fixée sur l'ensemble de membre inférieur (3, 4) et propre à solliciter l'élément élastique de rappel (121, 131) pour exercer une précontrainte élastique sur l'élément élastique de rappel.

10. Structure d'exosquelette selon la revendication 9, comprenant des moyens de réglage de la position de deuxième la butée (18) par rapport à l'ensemble de membre inférieur (3, 4).

11. Structure d'exosquelette selon l'une des revendications 1 à 10, dans laquelle le mécanisme de colonne vertébrale (19) comprend une pièce inférieure de colonne vertébrale (191) reliée à l'ensemble de bassin via la troisième liaison pivot (29) et une pièce supérieure de colonne vertébrale (192) reliée à l'ensemble de dos (5) via une cinquième liaison rotule autorisant une rotation de l'ensemble de dos (5) par rapport au mécanisme de colonne vertébrale (19) lors d'un mouvement d'inclinaison latérale et lors d'un mouvement de flexion/extension du rachis de l'utilisateur.

12. Structure d'exosquelette selon la revendication 11, dans laquelle la pièce supérieure de colonne vertébrale (192) est propre à coulisser longitudinalement par rapport à la pièce inférieure de colonne vertébrale (191), le mécanisme de colonne vertébrale (19) comprenant en outre un organe de rappel élastique propre à générer une force de rappel élastique tendant à s'opposer au coulissement de la pièce supérieure de colonne vertébrale (192) par rapport à la pièce inférieure de colonne vertébrale (191) lors d'une compression verticale du rachis de l'utilisateur.

13. Structure d'exosquelette selon la revendication 12, dans laquelle l'organe de rappel élastique comprend un cylindre et un piston propre à coulisser à l'intérieur du cylindre, l'un du piston et du cylindre étant monté fixe par rapport à la pièce supérieure de colonne vertébrale (192) et l'autre du piston et du cylindre étant monté fixe par rapport à la pièce inférieure de colonne vertébrale (191).

14. Structure d'exosquelette selon l'une des revendications 11 à 13, dans laquelle la pièce supérieure de colonne vertébrale (192) est reliée à la pièce inférieure de colonne vertébrale (191) par la quatrième liaison pivot (193) autorisant une rotation de la pièce supérieure de colonne vertébrale (192) par rapport à la pièce inférieure de colonne vertébrale (191) autour d'un axe longitudinal du mécanisme de colonne vertébrale (19) lors du mouvement de torsion du rachis de l'utilisateur.

15. Structure d'exosquelette selon l'une des revendications 1 à 14, comprenant des moyens de réglage (30) autorisant un réglage d'une distance entre la première liaison pivot (27) et la deuxième liaison pivot (28).

16. Structure d'exosquelette selon la revendication 15, dans laquelle les moyens de réglage (30) comprennent une ou plusieurs lumière(s) (31, 32) et un ou plusieurs pion(s) (33) monté(s) coulissant(s) à l'intérieur de la ou des lumière(s) (31, 32).

## Patentansprüche

1. Exoskelettstruktur (1), umfassend:
- eine Beckenanordnung (2), die einen Gürtel (21) umfasst, der imstande ist, das Becken eines Benutzers zu umgeben, um die Beckenanordnung (2) am Becken des Benutzers festzumachen,
- eine erste untere Gliedmaßenanordnung (3), die imstande ist, an einer ersten unteren Gliedmaße des Benutzers befestigt zu sein,
- eine erste Drehzapfenverbindung (27), die die erste untere Gliedmaßenanordnung (3) an die Beckenanordnung (2) anschließt, wobei die erste Drehzapfenverbindung (27) eine Rotation der ersten unteren Gliedmaßenanordnung (3) im Verhältnis zur Beckenanordnung (2) bei einer Abduktions- oder Adduktionsbewegung der ersten unteren Gliedmaße gestattet,
- ein erstes Organ (12), das imstande ist, ein erstes Kraftmoment zu erzeugen, das der Rotation der ersten unteren Gliedmaßenanordnung (3) im Verhältnis zur Beckenanordnung (2) bei einer Adduktionsbewegung der ersten unteren Gliedmaße entgegenwirkt, wobei das erste Organ (12) ein erstes elastisches Rückstellelement (121) zwischen der ersten unteren Gliedmaßenanordnung (3) und der Beckenanordnung (2) umfasst, wobei das erste elastische Rückstellelement (121) eine Rückstellkraft erzeugt, die der Rotation der ersten unteren Gliedmaßenanordnung (3) im Verhältnis zur Beckenanordnung (2) entgegenwirkt,
- einen ersten Anschlag (15), der imstande ist, an der Beckenanordnung (2) derart befestigt zu sein, dass in einem ersten Rotationswinkelbereich der ersten unteren Gliedmaßenanordnung (3) das erste elastische Rückstellelement (121) am ersten Anschlag anschlägt und über den ersten Anschlag auf die erste untere Gliedmaßenanordnung (3) eine Rückstellkraft ausübt, die der Adduktionsbewegung der unteren Gliedmaße entgegenwirkt, und in einem zweiten Winkelbereich das erste elastische Rückstellelement (121) nicht mehr am ersten Anschlag anschlägt und keine Rückstellkraft mehr auf die untere Gliedmaßenanordnung (3) ausübt,
- eine zweite Unteren Gliedmaßenanordnung (4), die imstande ist, an einer zweiten unteren Gliedmaße des Benutzers befestigt zu sein,
- eine zweite Drehzapfenverbindung (28), die die zweite untere Gliedmaßenanordnung (4) an die Beckenanordnung (2) anschließt, wobei die zweite Drehzapfenverbindung (28) eine Rotation der zweiten unteren Gliedmaßenanordnung (4) im Verhältnis zur Beckenanordnung (2) bei einer Abduktions- oder Adduktionsbewegung der zweiten unteren Gliedmaße gestattet,
- eine Rückenanordnung (5), die ein Geschirr (53) umfasst, das imstande ist, am Thorax des Benutzers festgemacht zu sein,
- einen Wirbelsäulenmechanismus (19), der die Rückenanordnung (5) mit der Beckenanordnung (2) verbindet,
- eine dritte Drehzapfenverbindung (29), die den Wirbelsäulenmechanismus (19) an die Beckenanordnung (2) anschließt, wobei die dritte Drehzapfenverbindung (29) eine Rotation der Beckenanordnung (2) im Verhältnis zur Rückenanordnung (5) bei einer relativen seitlichen Neigungsbewegung der Wirbelsäule des Benutzers im Verhältnis zum Becken des Benutzers gestattet,
- ein drittes Organ (14), das imstande ist, ein drittes Kraftmoment zu erzeugen, das der Rotation der Beckenanordnung im Verhältnis zur Rückenanordnung (5) bei einer relativen seitlichen Neigungsbewegung der Wirbelsäule im Verhältnis zum Becken entgegenwirkt, und
wobei der Wirbelsäulenmechanismus (19) eine vierte Drehzapfenverbindung (193) umfasst, die eine Rotation der Rückenanordnung (5) im Verhältnis zur Beckenanordnung (2) bei einer Torsionsbewegung der Wirbelsäule gestattet.

2. Exoskelettstruktur nach Anspruch 1, umfassend ein zweites Organ (13), das imstande ist, ein zweites Kraftmoment zu erzeugen, das der Rotation der zweiten unteren Gliedmaßenanordnung (4) im Verhältnis zur Beckenanordnung (2) bei einer Adduktionsbewegung der zweiten unteren Gliedmaße entgegenwirkt.

3. Exoskelettstruktur nach Anspruch 2, wobei das zweite Organ (13) ein zweites elastisches Rückstellelement (131) zwischen der zweiten unteren Gliedmaßenanordnung und der Beckenanordnung (2) umfasst, wobei das zweite elastische Rückstellelement (131) eine Rückstellkraft erzeugt, die der Rotation der zweiten unteren Gliedmaßenanordnung (4) im Verhältnis zur Beckenanordnung (2) entgegenwirkt.

4. Exoskelettstruktur nach einem der Ansprüche 1 bis 3, wobei das dritte Organ (14) ein drittes elastisches Rückstellelement (141) zwischen der Rückenanordnung (5) und der Beckenanordnung (2) umfasst, wobei das dritte elastische Rückstellelement (141) eine Rückstellkraft erzeugt, die der Rotation der Rückenanordnung (5) im Verhältnis zur Beckenanordnung (2) entgegenwirkt.

5. Exoskelettstruktur nach Anspruch 4, wobei eins der elastischen Rückstellelemente (121, 131, 141) ein Teil in Spiralform (120, 130, 140) umfasst mit einem ersten Ende (122, 132, 142), das mit der Beckenanordnung (2) verbunden ist, und einem zweiten Ende (123, 133, 143) gegenüber dem ersten Ende, das imstande ist, von der ersten unteren Gliedmaßenanordnung (3) oder der zweiten unteren Gliedmaßenanordnung (4) oder der Rückenanordnung (5) bei der Rotation der ersten unteren Gliedmaßenanordnung (3) oder der zweiten unteren Gliedmaßenanordnung (4) oder der Rückenanordnung (5) im Verhältnis zur Beckenanordnung (2) beansprucht zu werden.

6. Exoskelettstruktur nach einem der Ansprüche 4 und 5, umfassend einen ersten Anschlag (15), der imstande ist, an der Beckenanordnung (2) befestigt derart zu sein, dass in einem ersten Rotationswinkelbereich der ersten unteren Gliedmaßenanordnung (3) oder der zweiten unteren Gliedmaßenanordnung (4) im Verhältnis zur Beckenanordnung (2) das elastische Rückstellelement (121, 131) am ersten Anschlag anschlägt und über den ersten Anschlag auf die erste untere Gliedmaßenanordnung (3) oder die zweite untere Gliedmaßenanordnung (4) eine Rückstellkraft ausübt, die der Adduktionsbewegung der unteren Gliedmaße entgegenwirkt, und in einem zweiten Winkelbereich das elastische Rückstellelement (121, 131) nicht mehr am ersten Anschlag anschlägt und keine Rückstellkraft mehr auf die untere Gliedmaßenanordnung (3, 4) ausübt.

7. Exoskelettstruktur nach Anspruch 6, umfassend Einstellmittel (16) der Position des ersten Anschlags (15) im Verhältnis zur Beckenanordnung (2), die erlauben, einen Übergangswinkel zwischen dem ersten Winkelbereich und dem zweiten Winkelbereich einzustellen.

8. Exoskelettstruktur nach Anspruch 7, wobei die Einstellmittel der Position des ersten Anschlags (16) einen Schlitz (161) und einen Stift (162) umfassen, der in dem Schlitz gleitend angebracht ist.

9. Exoskelettstruktur nach einem der Ansprüche 4 bis 7, umfassend einen zweiten Anschlag (17), der an der unteren Gliedmaßenanordnung (3, 4) befestigt ist und der imstande ist, das elastische Rückstellelement (121, 131) zu beanspruchen, um eine elastische Vorspannung auf das elastische Rückstellelement auszuüben.

10. Exoskelettstruktur nach Anspruch 9, umfassend Einstellmittel der Position des zweiten Anschlags (18) im Verhältnis zur unteren Gliedmaßenanordnung (3, 4).

11. Exoskelettstruktur nach einem der Ansprüche 1 bis 10, wobei der Wirbelsäulenmechanismus (19) ein unteres Wirbelsäulenteil (191) umfasst, das mit der Beckenanordnung über die dritte Drehzapfenverbindung (29) verbunden ist, und ein oberes Wirbelsäulenteil (192), das mit der Rückenanordnung (5) über eine fünfte Kugelgelenkverbindung verbunden ist, die eine Rotation der Rückenanordnung (5) im Verhältnis zum Wirbelsäulenmechanismus (19) bei einer seitlichen Neigungsbewegung und bei einer Flexions-/Extensionsbewegung der Wirbelsäule des Benutzers gestattet.

12. Exoskelettstruktur nach Anspruch 11, wobei das obere Wirbelsäulenteil (192) imstande ist, längs im Verhältnis zum unteren Wirbelsäulenteil (191) zu gleiten, wobei der Wirbelsäulenmechanismus (19) ferner ein elastisches Rückstellorgan umfasst, das imstande ist, eine elastische Rückstellkraft zu erzeugen, die dem Gleiten des oberen Wirbelsäulenteils (192) im Verhältnis zum unteren Wirbelsäulenteil (191) bei einer vertikalen Kompression der Wirbelsäule des Benutzers entgegenwirkt.

13. Exoskelettstruktur nach Anspruch 12, wobei das elastische Rückstellorgan einen Zylinder und einen Kolben umfasst, der imstande ist, im Zylinder zu gleiten, wobei einer, der Kolben und der Zylinder, im Verhältnis zum oberen Wirbelsäulenteil (192) fest angebracht ist und der andere, der Kolben und der Zylinder, im Verhältnis zum unteren Wirbelsäulenteil (191) fest angebracht ist.

14. Exoskelettstruktur nach einem der Ansprüche 11 bis 13, wobei das obere Wirbelsäulenteil (192) mit dem unteren Wirbelsäulenteil (191) durch die vierte Drehzapfenverbindung (193) verbunden ist, die eine Rotation des oberen Wirbelsäulenteils (192) im Verhältnis zum unteren Wirbelsäulenteil (191) um eine Längsachse des Wirbelsäulenmechanismus (19) bei der Torsionsbewegung der Wirbelsäule des Benutzers gestattet.

15. Exoskelettstruktur nach einem der Ansprüche 1 bis 14, umfassend Einstellmittel (30), die eine Einstellung eines Abstands zwischen der ersten Drehzapfenverbindung (27) und der zweiten Drehzapfenverbindung (28) gestatten.

16. Exoskelettstruktur nach Anspruch 15, wobei die Einstellmittel (30) einen oder mehrere Schlitze (31, 32) und einen oder mehrere Stifte (33) umfassen, die gleitend in dem oder den Schlitzen (31, 32) angebracht sind.

## Claims

1. An exoskeleton structure (1) comprising:
- a pelvis assembly (2) comprising a belt (21) capable of surrounding the pelvis of a user to attach the pelvis assembly (2) to the pelvis of the user,
- a first lower limb assembly (3) capable of being fastened to a first lower limb of the user,
- a first pivot link (27) connecting the first lower limb assembly (3) to the pelvis assembly (2), the first pivot link (27) allowing rotation of the first lower limb assembly (3) relative to the pelvis assembly (2) during an abduction or adduction movement of the first lower limb,
- a first member (12) capable of generating a first torque tending to oppose the rotation of the first lower limb assembly (3) relative to the pelvis assembly (2) during an adduction movement of the first lower limb, the first member (12) comprising a first elastic return element (121) between the first lower limb assembly (3) and the pelvis assembly (2), the first elastic return element (121) generating a return force tending to oppose the rotation of the first lower limb assembly (3) relative to the pelvis assembly (2),
- a first abutment (15) capable of being fastened on the pelvis assembly (2) so that in a first angular range of rotation of the first lower limb assembly (3), the first elastic return element (121) abuts against the first abutment and exerts, via the first abutment, on the first lower limb assembly (3) a return force tending to oppose the adduction movement of the lower limb, and in a second angular range, the first elastic return element (121) is no longer in abutment against the first abutment and no longer exerts a return force on the lower limb assembly (3),
- a second lower limb assembly (4) capable of being fastened to a second lower limb of the user,
- a second pivot link (28) connecting the second lower limb assembly (4) to the pelvis assembly (2), the second pivot link (28) allowing rotation of the second lower limb assembly (4) relative to the pelvis assembly (2) during an abduction or adduction movement of the second lower limb,
- a back assembly (5) comprising a harness (53) capable of being attached to the user's chest,
- a spinal column mechanism (19) linking the back assembly (5) to the pelvis assembly (2),
- a third pivot link (29) connecting the spinal column mechanism (19) to the pelvis assembly (2), the third pivot link (29) allowing rotation of the pelvis assembly (2) relative to the back assembly (5), during a relative movement of lateral inclination of the user's spine relative to the user's pelvis,
- a third member (14) capable of generating a third torque tending to oppose the rotation of the pelvis assembly relative to the back assembly (5) during the relative movement of lateral inclination of the spine relative to the pelvis, and
wherein the spinal column mechanism (19) comprises a fourth pivot link (193) allowing rotation of the back assembly (5) relative to the pelvis assembly (2), during a twisting movement of the spine.

2. The exoskeleton structure according to claim 1, comprising a second member (13) capable of generating a second torque tending to oppose the rotation of the second lower limb assembly (4) relative to the pelvis assembly (2) during an adduction movement of the second lower limb.

3. The exoskeleton structure according to claim 2, wherein the second member (13) comprises a second elastic return element (131) between the second lower limb assembly (4) and the pelvis assembly (2), the second elastic return element (131) generating a return force tending to oppose the rotation of the second lower limb assembly (4) relative to the pelvis assembly (2).

4. The exoskeleton structure according to one of claims 1 to 3, wherein the third member (14) comprises a third elastic return element (141) between the back assembly (5) and the pelvis assembly (2), the third elastic return element (141) generating a return force tending to oppose the rotation of the back assembly (5) relative to the pelvis assembly (2).

5. The exoskeleton structure according to claim 4, wherein one of the elastic return element (121, 131, 141) comprises a spiral-shaped part (120, 130, 140) having a first end (122, 132, 142) linked to the pelvis assembly (2) and a second end (123, 133, 143), opposite the first end, capable of being stressed by the first lower limb assembly (3) or the second lower limb assembly (4) or the back assembly (5) when the first lower limb assembly (3) or the second lower limb assembly (4) or the back assembly (5) is rotated relative to the pelvis assembly (2).

6. The exoskeleton structure according to one of claims 4 and 5, comprising a first abutment (15) capable of being fastened on the pelvis assembly (2) so that in a first angular range of rotation of the first lower limb assembly (3) or the second lower limb assembly (4) relative to the pelvis assembly (2), the elastic return element (121, 131) abuts against the first abutment and exerts, via the first abutment, on the first lower limb assembly (3) or the second lower limb assembly (4) a return force tending to oppose the adduction movement of the lower limb, and in a second angular range, the elastic return element (121, 131) is no longer in abutment against the first abutment and no longer exerts a return force on the lower limb assembly (3, 4).

7. The exoskeleton structure according to claim 6, comprising means for adjusting (16) the position of the first abutment (15) relative to the pelvis assembly (2) allowing to adjust a transition angle between the first angular range and the second angular range.

8. The exoskeleton structure according to claim 7, wherein the means for adjusting the position of the first abutment (16) comprise an opening (161) and a pin (162) slidably mounted inside the opening.

9. The exoskeleton structure according to one of claims 4 to 7, comprising a second abutment (17) fastened on the lower limb assembly (3, 4) and capable of stressing the elastic return element (121, 131) to exert an elastic preload on the elastic return element.

10. The exoskeleton structure according to claim 9, comprising means for adjusting the position of the second abutment (18) relative to the lower limb assembly (3, 4).

11. The exoskeleton structure according to one of claims 1 to 10, wherein the spinal column mechanism (19) comprises a lower part (191) of the spinal column linked to the pelvis assembly via the third pivot link (29) and an upper part (192) of the spinal column linked to the back assembly (5) via a fifth ball joint connection allowing rotation of the back assembly (5) relative to the spinal column mechanism (19) during a lateral inclination movement and during a bending/stretching movement of the user's spine.

12. The exoskeleton structure according to claim 11, wherein the upper part (192) of the spinal column is capable of sliding longitudinally relative to the lower part (191) of the spinal column, the spinal column mechanism (19) further comprising an elastic return member capable of generating an elastic return force tending to oppose the sliding of the upper part (192) of the spinal column relative to the lower part (191) of the spinal column during vertical compression of the user's spine.

13. The exoskeleton structure according to claim 12, wherein the elastic return member comprises a cylinder and a piston capable of sliding inside the cylinder, one of the piston and the cylinder being fixedly mounted relative to the upper part (192) of the spinal column and the other one of the piston and the cylinder being fixedly mounted relative to the lower part (191) of the spinal column.

14. The exoskeleton structure according to one of claims 11 to 13, wherein the upper part (192) of the spinal column is linked to the lower part (191) of the spinal column by the fourth pivot link (193) allowing rotation of the upper part (192) of the spinal column relative to the lower part (191) of the spinal column about a longitudinal axis of the spinal column mechanism (19) during the twisting movement of the user's spine.

15. The exoskeleton structure according to one of claims 1 to 14, comprising adjustment means (30) allowing adjustment of a distance between the first pivot link (27) and the second pivot link (28).

16. The exoskeleton structure according to claim 15, wherein the adjustment means (30) comprise one or more opening(s) (31, 32) and one or more pin(s) (33) slidably mounted inside the opening(s) (31, 32).
